# FASCICULE DE BREVET EUROPEEN

(11) **EP 3 631 992 B1**
(45) Date de publication et mention de la délivrance du brevet: **12.05.2021**
(21) Numéro de dépôt: 18737331.1
(22) Date de dépôt: 23.05.2018
(51) Int. Cl.: H04B 3/54, H04L 12/28

(54) **DISPOSITIF ET PROGRAMME DE ROUTAGE DES SIGNAUX CPL**
VORRICHTUNG UND PROGRAMM ZUM ROUTEN VON PLC-SIGNALEN
DEVICE AND PROGRAM FOR ROUTING PLC SIGNALS

(30) Priorité: 31.05.2017 FR 1754821
(43) Date de publication de la demande: 08.04.2020
(73) Titulaire: ORANGE, 75015 Paris (FR)
(72) Inventeur: LE GUILLOU, Xavier, 92326 Châtillon Cedex (FR); BRICHETEAU, Dimitri, 92326 Châtillon Cedex (FR)
(86) Numéro de dépôt international: PCT/FR2018/000134
(87) Numéro de publication internationale: WO 2018/220290

(56) Documents cités:
- WO-A1-2014/115286
- US-A1- 2013 138 982

## Description

### Domaine technique

L'invention se rapporte aux courants électriques porteurs en ligne dans les réseaux domestiques.

L'invention se rapporte en particulier à un réseau électrique du domicile d'un utilisateur.

### Etat de la technique

Le courant porteur en ligne (CPL) permet de faire transiter localement des données numériques par l'intermédiaire du réseau de câbles électriques d'un domicile.

Le réseau de câbles électriques d'un domicile, depuis le compteur jusqu'aux prises, fait circuler le courant sur une fréquence basse (de 50 Hz en France). Le principe du courant porteur en ligne consiste à diffuser simultanément sur ces mêmes câbles électriques des données numériques, ou informatiques, à une fréquence plus élevée. Un signal électrique modulé contenant ces données numériques est superposé au courant alternatif basse fréquence.

Pour émettre ou recevoir le signal électrique de données, on connecte à la ligne électrique un appareil modulateur-démodulateur (modem), aussi appelé « adaptateur CPL » dans la suite, à connecter d'une part à une prise électrique, d'autre part à un équipement terminal. En émission, le modem génère, à partir des données numériques, un signal analogique (de fréquence porteuse modulée par exemple) à injecter sur la ligne électrique. En réception, le modem démodule le signal analogique pour récupérer les données numériques du signal d'origine. Des exemples des systèmes et méthodes de l'art antérieure sont divulgués dans la demande PCT WO 2014/115286 et dans la demande de brevet américain US 2013/138982.

Un certain nombre de normes et standards ont été définis dans ce domaine, par exemple les normes de la famille HomePlug ou la norme ISO IEEE 1901 (IEEE Standard for Broadband over Power Line Networks) pour les applications informatiques, ou encore le standard EHS / Konnex (aussi connu sous la référence Internationale "ISO/IEC 14 543-3") pour le CPL bas débit adapté à l'électroménager.

Cette technologie présente une alternative intéressante aux réseaux sans fils, par exemple de type Wi-FI. Cependant, elle présente plusieurs inconvénients.
- Les modems/adaptateurs CPL consomment de l'électricité dès qu'ils sont branchés sur une prise électrique. Or il se peut que certains appareils de l'utilisateur n'aient pas besoin, par moments, de mettre en œuvre une communication CPL. la consommation d'électricité n'est dans ce cas pas justifiée.
- De plus, les communications CPL génèrent des ondes électromagnétiques qui sont bien souvent non souhaitées par l'utilisateur.
- Si l'utilisateur possède plusieurs réseaux, ou sous-réseaux CPL, ils peuvent entrer en interférence les uns avec les autres. Il n'existe pas de solution pour limiter la portée du CPL aux seules pièces d'un logement qui en ont réellement besoin.

Il n'existe pas aujourd'hui de manière simple de résoudre ces problèmes.

L'invention offre une solution ne présentant pas les inconvénients de l'état de la technique.

### L'invention

A cet effet, selon un aspect fonctionnel, l'invention a pour objet un procédé de routage de courants porteurs en ligne dans un site résidentiel équipé d'une pluralité d'équipements électriques aptes à communiquer sur une pluralité de sous-réseaux électriques par courants porteurs en ligne, chaque sous-réseau correspondant à une partie du réseau électrique du site résidentiel isolé électriquement des autres sous-réseaux, ledit procédé comportant les étapes suivantes pour au moins un sous-réseau :
- obtention d'une requête de communication comportant un identifiant d'un second équipement électrique;
- obtention d'une structure de données d'association du sous-réseau associant ledit sous-réseau avec un identifiant d'au moins un premier équipement électrique;
- comparaison de l'identifiant obtenu du second équipement électrique avec l'identifiant dudit au moins un premier équipement électrique associé au sous-réseau ;
- en fonction des résultats de la comparaison, commande d'activation du sous-réseau.

On entend ici par équipement électrique un équipement terminal branché dans le site résidentiel sur le réseau électrique et apte par ailleurs à communiquer par courants porteurs avec d'autres équipements du réseau local, sous contrôle d'une passerelle de service gestionnaire du réseau local. Un tel équipement est relié à un boîtier de gestion des courants porteurs en ligne, ou CPL.

On entend par sous-réseau électrique, ou sous-partie du réseau, une partie du réseau électrique du domicile associée à un disjoncteur, ou dispositif permettant d'isoler une sous-partie (un sous-réseau) du réseau électrique du site. Un tel sous-réseau peut être associé à un ou plusieurs boîtiers CPL. Un boîtier CPL est pour sa part associé à un seul disjoncteur.

On entend par dispositif de routage un dispositif matériel ou logiciel apte à désactiver et activer la fonction CPL des boîtiers CPL, c'est à dire à commander la suppression des courants porteurs dans un (ou plusieurs) sous-réseaux, assurant ainsi la cohérence (ou routage) des communications par courants porteurs dans le domicile.

On entend par structure de données d'association une structure de données informatiques (table, liste, arbre, etc.) établissant une association entre deux entités, ici un sous-réseau et un équipement associé. Un équipement est dit associé s'il est connecté électriquement au sous-réseau, et cette association est reflétée dans la structure de données d'association.

On entend par identifiant une donnée ou ensemble de données permettant d'identifier un équipement de manière unique (adresse, description, etc.)

Par commande d'activation (resp. désactivation) du sous-réseau, on entend toute opération dont le but est d'activer (resp. désactiver) la fonction CPL d'un sous-réseau, c'est-à-dire d'autoriser (resp. interdire) la communication par courants porteurs sur ce sous-réseau.

Avantageusement, un tel procédé permet d'activer un sous-réseau par courants porteurs seulement dans le cas où cela est nécessaire, c'est-à-dire dans le cas où un équipement au moins associé au sous-réseau doit entrer en communication en utilisant les courants porteurs. Dans le cas contraire, le sous-réseau pourra rester désactivé (éteint). On réalise ainsi des économies d'énergie et une diminution du rayonnement électromagnétique lié à la circulation des courants porteurs. On a vu précédemment qu'il pouvait être très utile d'utiliser ponctuellement un réseau CPL, sans pour autant souhaiter que l'ensemble du réseau électrique soit inondé en permanence de courants porteurs. Le procédé apporte une solution à ce problème en activant automatiquement un sous-réseau seulement lorsque cela s'avère nécessaire. Le dispositif associé peut être placé par exemple en coupure d'une sous-partie du tableau électrique du site voire être intégré directement à l'un ou plusieurs des disjoncteurs du tableau électrique afin de couper, sur commande, le CPL dans une portion du site résidentiel : il sera ainsi aisé de choisir quelles pièces de la maison doivent ou ne doivent pas être parcourues par les courants porteurs.

Selon un mode de mise en oeuvre particulier de l'invention, un procédé tel que décrit ci-dessus inclut en outre les étapes suivantes :
- obtention de l'état desdits premiers équipements électriques associés au sous-réseau ;
- en fonction de l'état desdits premiers équipements électriques, commande de désactivation du sous-réseau.

Ce mode de mise en œuvre de l'invention permet, en testant simplement l'état électrique des équipements, de désactiver automatiquement un sous-réseau, notamment si tous les appareils qui lui sont associés sont en veille ou éteints. Dans un tel cas en effet il est inutile et coûteux de maintenir des courants porteurs dans ce sous-réseau. Le sous-réseau pourra être réactivé automatiquement, comme expliqué précédemment, dès qu'une communication sera effectivement requise sur ce sous-réseau.

Selon un autre mode de mise en œuvre particulier de l'invention, qui pourra être mis en œuvre alternativement ou cumulativement avec le précédent, un procédé tel que décrit ci-dessus est en outre caractérisé en ce que la requête de communication est un message de réveil en provenance d'un premier équipement associé au sous-réseau.

Avantageusement selon ce mode, le sous-réseau peut être réactivé automatiquement si l'un des équipements qui lui est associé sort de veille ou se rallume, ce qui signifie qu'il peut potentiellement initier une communication avec un autre équipement du réseau local par courants porteurs.

Selon un autre mode de mise en œuvre particulier de l'invention, qui pourra être mis en œuvre alternativement ou cumulativement avec les précédents, un procédé tel que décrit ci-dessus est en outre caractérisé en ce que la requête de communication comporte un message à destination d'un premier équipement associé au sous-réseau.

Avantageusement selon ce mode, le sous-réseau peut être réactivé automatiquement si un équipement qui se trouve à l'extérieur du sous-réseau électrique (mais dans le contexte du réseau local) souhaite établir une communication avec un équipement qui lui est associé.

Selon une variante du premier mode de mise en œuvre de l'invention, un procédé tel que décrit est en outre caractérisé en ce que la requête d'obtention de la structure de données d'association du sous-réseau est précédée d'une étape d'obtention d'un message de mise en veille d'un premier équipement associé au sous-réseau.

Par « mise en veille » on entend mise en veille, mise en veille profonde ou déconnexion (extinction) de l'équipement. Avantageusement selon cette variante, lorsque procédé de routage du sous-réseau reçoit une indication selon laquelle un équipement associé se met en veille ou s'éteint, le dispositif de routage peut consulter la structure de donnée des associations du sous-réseau et prendre la décision de désactiver ce sous-réseau si tous les équipements associés sont éteints ou en veille.

Selon un aspect matériel, l'invention concerne également un dispositif de routage de courants porteurs en ligne dans un site résidentiel équipé d'une pluralité d'équipements électriques aptes à communiquer sur une pluralité de sous-réseaux par courants porteurs en ligne, chaque sous-réseau correspondant à une partie du réseau électrique du site résidentiel isolé électriquement des autres sous-réseaux, ledit dispositif de routage comportant pour au moins un sous-réseau :
- un module d'activation
- un module d'obtention d'une requête de communication comportant un identifiant d'un second équipement électrique ;
- un module d'obtention (GES) d'une structure de données d'association du sous-réseau associant ledit sous-réseau avec un identifiant d'au moins un premier équipement électrique ;
- un module de comparaison (GES) de l'identifiant obtenu du second équipement électrique avec l'identifiant dudit au moins un premier équipement électrique associé au sous-réseau ;
- un module de commande d'activation du sous-réseau en fonction des résultats de la comparaison :

Le terme module peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions telles que décrites pour les modules concernés. De la même manière, un composant matériel correspond à tout élément d'un ensemble matériel (ou hardware) apte à mettre en œuvre une fonction ou un ensemble de fonctions pour le module concerné (circuit intégré, carte à puce, carte à mémoire, etc.)

Selon un autre aspect matériel, l'invention concerne également un disjoncteur intelligent comportant un tel dispositif de routage.

On entend par disjoncteur intelligent un disjoncteur associé à au moins un module de filtrage des courants CPL, situé typiquement sur le tableau électrique du site, ou tableau de protection, un coffret qui regroupe classiquement les circuits électriques des différents sous-réseaux du domicile (chambres, cuisine, éclairage, etc.) et en accueille les organes de sécurité et de protection comme les disjoncteurs.

Selon un autre aspect matériel, l'invention concerne également une passerelle de service comportant un tel dispositif de routage.

Avantageusement selon ce mode, la passerelle de service, qui pilote le réseau local, peut de surcroît piloter les sous-réseaux CPL servant de support à ce réseau local. Ceci est avantageux car la passerelle est un équipement central ayant la connaissance de tous les équipements connectés du réseau local, incluant ceux qui communiquent par courants porteurs. Cette connaissance des équipements facilite la mise en oeuvre d'un procédé de routage sur une telle passerelle.

Selon un autre aspect matériel, l'invention concerne également un programme d'ordinateur apte à être mis en oeuvre dans un dispositif de routage tel que défini ci-dessus, le programme comprenant des instructions de code qui, lorsque le programme est exécuté par un processeur, réalise les étapes du procédé de routage.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Cette passerelle, ce dispositif de routage et ce programme d'ordinateur présentent des caractéristiques et avantages analogues à ceux décrits précédemment en relation avec le procédé de routage.

Selon encore un autre aspect matériel, l'invention a trait à un support d'enregistrement lisible par un processeur de données sur lequel est enregistré un programme comprenant des instructions de code de programme pour l'exécution des étapes du procédé de routage défini ci-dessus. Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur. D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet. Alternativement, le support d'informations peut être un circuit intégré dans lequel le programme est incorporé, le circuit étant adapté pour exécuter ou pour être utilisé dans l'exécution du procédé en question.

L'invention sera mieux comprise à la lecture de la description qui suit, donnée à titre d'exemple et faite en référence aux dessins annexés.

### Les figures:

La figure 1 représente un contexte domestique d'utilisation d'un réseau CPL selon l'état de l'art.
La figure 2 représente schématiquement un mode de réalisation de l'invention sous la forme d'un système de routage intelligent des signaux CPL.
La figure 3 représente une architecture matérielle d'un système de routage selon un premier mode de réalisation de l'invention.
La figure 4 représente une architecture matérielle d'un système de routage selon un second mode de réalisation de l'invention.
La figure 5 représente schématiquement les étapes d'un procédé selon le premier mode de réalisation de l'invention.
La figure 6 représente schématiquement les étapes d'un procédé selon le second mode de réalisation de l'invention.

### Description détaillée d'un exemple de réalisation illustrant l'invention

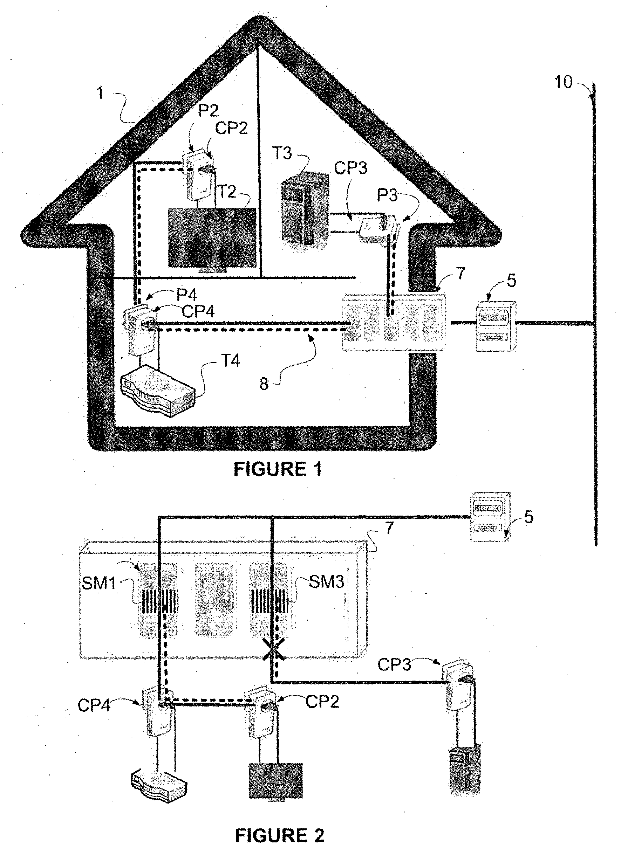

La figure 1 représente un contexte domestique d'utilisation d'un réseau CPL selon l'état de l'art.

Le site résidentiel (1) est constitué par exemple d'une maison, ou domicile, dans lequel habitent un ou plusieurs utilisateurs d'équipements électriques (appareils de chauffage, d'éclairage, de réfrigération, etc.) et/ou informatiques (tablettes, ordinateurs personnels, smartphones, etc.) En variante, on pourrait imaginer un bâtiment d'habitation collectif, un immeuble de bureau ou un bâtiment industriel, etc.

Dans ce site sont implantés différents équipements électriques et informatiques (T2 à T4), par exemple un téléviseur (T2), un disque dur ou NAS (T3), une passerelle domestique (T4), etc. Ces différents équipements sont branchés via des adaptateurs CPL (CP2-CP4) sur un réseau électrique privé dont l'architecture est habituelle, ce réseau privé étant lui-même relié au réseau électrique public (10) d'un distributeur d'énergie par l'intermédiaire d'un poste de raccordement (7), par exemple un tableau électrique basse tension. Les câbles électriques constitutifs du réseau électrique privé de l'utilisateur, porteurs à la fois des signaux électriques et informatiques, sont représentés en lignes pleines. Ce tableau électrique (7) est lié au compteur intelligent (5), par exemple de type Linky, du distributeur d'électricité.

Le site résidentiel est équipé d'une passerelle de service, ou « box » (4), pilotant un réseau de communications domestiques (LAN) et connectée à un réseau large-bande (WAN, non représenté). La passerelle 4 est dotée d'une prise Ethernet connectée sur le port Ethernet de la prise CPL CP4 via un câble Ethernet.

L'adaptateur CPL CP4 est branché sur une prise électrique P4 à proximité. De la même manière, le terminal 2 (resp. 3) est branché sur un adaptateur CP2 (resp. CP3) lui-même branché sur une prise électrique P2 (resp. P3) à proximité. Naturellement cette architecture est donnée à titre d'exemple, de nombreuses autres configurations pouvant être envisageables (les CPL peuvent par exemple fonctionner uniquement par paire et non par groupement de trois éléments comme représenté ici).

Le réseau CPL du domicile (8) est représenté en traits pointillés. Il s'agit naturellement d'une représentation toute schématique, l'ensemble des signaux étant physiquement porté par les câbles électriques.

Cette architecture de l'état de l'art pose un problème dans le cas où, comme illustré sur la figure 1, toutes les lignes/modems CPL sont allumés en permanence. En effet, comme mentionné au-dessus, les modems/adaptateurs CPL consomment de l'électricité lorsqu'ils qu'ils sont branchés sur une prise électrique et génèrent des ondes électromagnétiques qui peuvent nuire à l'utilisateur et perturber les autres communications CPL si l'utilisateur dispose de plusieurs sous-réseaux CPL.

Il est donc souhaitable de disposer d'une solution permettant d'isoler correctement et automatiquement les sous-réseaux CPL, en fonction de l'utilisation qui en est faite à un instant donné.

A cet effet, la figure 2 représente schématiquement un mode de réalisation de l'invention sous la forme d'un système de routage intelligent des signaux CPL.

Le système de routage (6) selon l'invention consiste en une pluralité de modules « intelligents » (SM1-SM3), appelés dans la suite « disjoncteurs intelligents », placés par exemple :
- de préférence, dans le tableau électrique auquel sont raccordés de manière bien connue les différents appareils électriques de la maison et les CPL, en remplacement ou en complément des disjoncteurs actuels ;
- alternativement dans un boîtier de dérivation qui contrôle une sous-partie du réseau électrique (sous-partie d'un disjoncteur) ;
- alternativement, dans les prises CPL, mais on notera dans ce cas que certaines pièces de la maison risquent de continuer à être inondées par les courants porteurs puisque ceux-ci arriveront jusqu'au boîtier CPL en empruntant des chemins de câblage électrique qui ne sont pas maîtrisés.

Le système de routage peut comprendre un module de contrôle du routage qui peut être situé par exemple dans le réseau local informatique de l'utilisateur, piloté par sa passerelle de service (4). Le module peut se trouver typiquement sur la passerelle elle-même. Dans cette optique, chaque module intelligent de routage (SM) peut être relié à la passerelle domestique par une liaison filaire (CPL, Ethernet, etc.) ou sans fils (Wi-Fi, Bluetooth, etc.). Comme il sera décrit par la suite, la passerelle domestique peut, selon les modes de réalisation et variantes de mise en œuvre, prendre en charge tout ou partie de l'invention.

Chaque disjoncteur intelligent (SM - Smart Disjoncteur) du dispositif de routage (6) annule la modulation CPL du signal 50Hz en coupant la bande de fréquence correspondant à la modulation CPL (la bande coupée dépendant de la technologie CPL employée).

Le module intelligent est ainsi capable de couper sélectivement les signaux CPL qui ne sont pas nécessaires à un instant donné dans la maison : par exemple sur le schéma de la figure 2, le disque dur (NAS, 3) n'étant pas utilisé, la « branche » CPL est coupée par le disjoncteur intelligent (SM3), évitant ainsi une consommation électrique et un rayonnement électromagnétique inutiles. Sur la figure 2, ce disjoncteur intelligent (SM3) est associé au disjoncteur électrique correspondant du tableau électrique. Ce positionnement évite tout courant CPL inutile dans le sous-réseau. Il pourrait alternativement être placé au niveau du CPL CP3 lui-même, avec la réserve émise ci-dessus.

Un disjoncteur intelligent offre donc au moins deux fonctions : l'une pour décider s'il faut ou non supprimer les signaux CPL, et l'autre pour supprimer effectivement les signaux CPL dans l'affirmative.

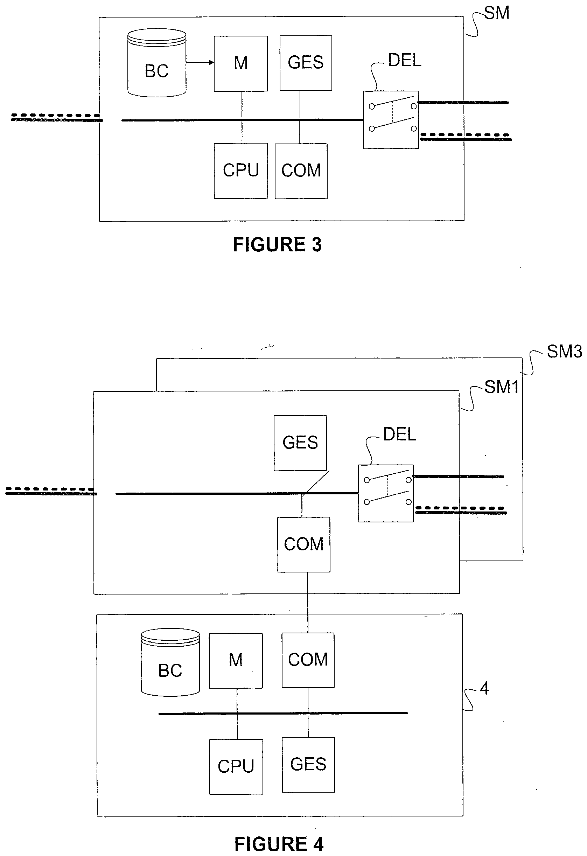

A cet effet, la figure 3 représente une architecture matérielle d'un système de routage selon un premier mode de réalisation de l'invention

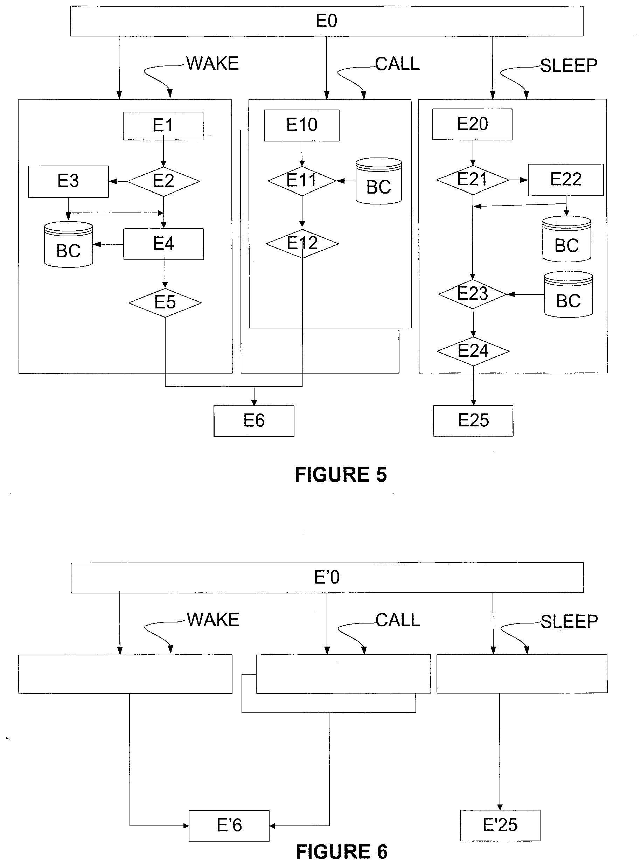

Le disjoncteur intelligent est composé, selon ce mode de réalisation, des modules fonctionnels suivants :
- un module apte à supprimer les signaux CPL, noté DEL, qui peut prendre par exemple la forme :
   ∘ d'un filtre passe-bande apte à filtrer au moins une bande de fréquence des courants porteurs en ligne pour annuler la modulation CPL du signal 50Hz. La bande coupée/supprimée dépendra de la technologie CPL employée. Par exemple, le dispositif sera configuré pour une coupure :
      ■ Pour la norme HomePlug / HomePlug AV, de 1.8 à 30 MHz ;
      ■ Pour la norme HomePlug AV2, de 1.8 à 86MHz ;
      ■ etc.
   ∘ un démodulateur-modulateur apte à démoduler le signal CPL dans le but de le supprimer ;
   ∘ un simple interrupteur pour désactiver la fonction CPL d'un boîtier CPL (sans pour autant influer sur l'alimentation électrique) dans le cas où il est situé dans le module CPL ;
   ∘ etc.
- un module de gestion (GES) apte à commander l'activation/désactivation (A/D) des signaux CPL en fonction d'un critère prédéterminé. Par exemple, et de manière non limitative, un tel critère peut être de type :
   ∘ temporel : le signal est supprimé la nuit, le week-end, etc.
   ∘ relatif à l'activité d'un équipement électrique : si tous les appareils connectés à un CPL sont éteints ou en veille, il est inutile de conserver les signaux de données relatifs à ce CPL ; en revanche dès qu'un appareil se réveille et souhaite échanger des données informatiques, il faut être capable de rétablir la modulation CPL.
   ∘ etc.
- de mémoires M articulées autour d'un processeur (CPU). Les mémoires peuvent être de type ROM (de l'anglais Read Only Memory) ou RAM (de l'anglais Random Access Memory), amovibles ou fixes, etc. La mémoire vive permet de stocker de manière non durable des données de calcul utilisées lors de la mise en œuvre d'un procédé selon des modes de réalisation. La mémoire non volatile (par exemple du type EEPROM) permet de stocker par exemple un programme d'ordinateur selon un mode de réalisation pour son exécution par un processeur, ainsi que des données relatives aux appareils connectés, notamment la structure de données d'association entre les sous-réseaux et les équipements, représentée par exemple sous forme de table comme il sera décrit plus tard à l'appui des figures 5 et 6.
- tous ces modules communiquent classiquement entre eux via un bus de données.

La figure 4 représente une architecture matérielle d'un système de routage selon un second mode de réalisation de l'invention.

Chaque disjoncteur intelligent est sous contrôle, selon ce mode de réalisation, de la passerelle de service (4). Le disjoncteur intelligent (SM) est donc simplifié. Il se compose des modules suivants :
- un module apte à supprimer les signaux CPL, noté DEL, qui peut prendre une forme quelconque, telle que mentionnée dans le mode de réalisation précédent, du moment que la fonction de suppression des signaux CPL est rendue (filtre, démodulateur, etc.).
- un module de communication (COM) qui lui permet de communiquer avec un dispositif de pilotage, ici la passerelle de service (4),
   ∘ sans fils via un canal radio de type Wi-Fi, Bluetooth, NFC, Zigbee (non représenté), etc.
   ∘ avec fils via par exemple une liaison Ethernet ou par courants porteurs (CPL).
- un module de gestion (GES) apte à commander l'activation/désactivation (A/D) les signaux CPL en fonction d'un critère prédéterminé. De préférence dans ce cas, le module de gestion est une simple unité logique qui reçoit un ordre de l'extérieur via le module COM et prend en conséquence la décision binaire de supprimer ou non la composante CPL du signal par activation/désactivation du module DEL.
- optionnellement, des mémoires M articulées autour d'un processeur (CPU) ou microcontrôleur apte à piloter les autres modules.

La figure 5 représente schématiquement les étapes d'un procédé selon le premier mode de réalisation de l'invention. Selon ce mode de réalisation, le procédé s'exécute sur le disjoncteur intelligent. On rappelle que chaque disjoncteur intelligent est un module rattaché à un sous-réseau CPL du site, commandé par un ou plusieurs boîtiers CPL.

Lors d'une étape E0 d'initialisation, le précédé récupère l'état du CPL (sous-réseau) qui peut être allumé ou éteint, ainsi qu'éventuellement la liste des terminaux connectés au sous-réseau. Il remplit la structure des données d'association (BC) pour le sous-réseau. Puis il se met en attente de la réception d'un événement. Selon l'exemple de la figure 5, cet événement peut être de type *WAKE* si un équipement connecté au CPL se réveille ou si un nouvel appareil s'y connecte, *CALL* si un équipement externe (du réseau local mais situé sur un autre sous-réseau électrique) cherche à joindre un équipement du sous-réseau ou *SLEEP* si un équipement connecté au sous-réseau se met en veille, s'éteint ou quitte le sous-réseau. Chacun de ces cas est traité séparément ci-dessous.

### WAKE : connexion d'un équipement (TA) au CPL ou réveil d'un équipement connecté au sous-réseau

Lors d'une étape E1, le disjoncteur intelligent (SM) reçoit le message de réveil comportant en paramètre l'identifiant de l'équipement, par exemple :
- L'adresse MAC de l'équipement («Media Access Control ») permettant d'identifier le terminal sans ambiguïté ;
- L'adresse IP locale de l'équipement dans le réseau local ;
- etc.

Ce message peut par exemple prendre la forme schématique :

### PLC_c/ient_set_state(AA:BB:CC:DD:EE:FF,ON)

Il effectue alors une étape de test, E2, visant à savoir si l'appareil est déjà associé au sous-réseau.

Si le résultat de ce test est négatif, il est suivi d'une étape E3 d'enregistrement de l'adresse MAC de l'équipement dans la base BC, dans une table d'adresses, comme représenté par exemple dans le tableau ci-dessous pour lequel chaque ligne mémorise le nom de l'équipement (T1-T3), son état (éteint-OFF, allumé-ON, en veille-VEILLE, etc.) et son adresse (MAC@).

**Table 1 : exemple de structure de donnée (BC) des équipements associés au sous-réseau du disjoncteur intelligent**

| Equipement | état | adresse (MAC@) |
|---|---|---|
| T1 | ON | *AA:BB:CC:DD:EE:FF* |
| T2 | OFF | *AA:BB:CC:DD:EE:GG* |
| T3 | VEILLE | *AA:BB:CC:DD:EE:HH* |

En revanche si le résultat de ce test est positif, c'est-à-dire que l'équipement est déjà associé au sous-réseau, une étape successive E4 permet de mettre à jour l'état de l'appareil en association avec son adresse dans la structure de données BC, par exemple de faire passer l'indicateur d'état de la valeur VEILLE à la valeur ON.

Lors d'une étape E5, la structure de données (BC) des équipements étant à jour, un test est effectué pour savoir si le boîtier CPL est éteint, c'est-à-dire si le sous-réseau CPL est actif ou non.

Si le CPL est éteint, et comme au moins un équipement est répertorié comme actif dans la base BC, le CPL est activé lors d'une étape E6. Sinon aucune action n'est effectuée et on peut revenir à l'étape E0.

### CALL = un équipement externe au sous-réseau (TB) cherche à joindre l'équipement du sous-réseau (TA)

Lors d'une étape E10, le disjoncteur intelligent (SM) reçoit le message d'appel CALL comportant en paramètre l'identification de l'équipement appelé, par exemple l'adresse MAC de l'équipement cible («Media Access Control ») permettant d'identifier le terminal sans ambiguïté.

Ce message peut par exemple prendre la forme :
PLC_client_call(AA:BB:CC:DD:EE:FF)

Il effectue alors une étape de test, E11, pour vérifier que la structure des données d'association contient l'identifiant de l'équipement cible TA.

Si le résultat de ce test est positif, il est suivi d'une étape E12 de test de l'état du CPL. Si le CPL est éteint, un ordre d'activation de la fonction CPL est donné lors de l'étape E6 décrite précédemment. Sinon aucune action n'est effectuée et on peut revenir à l'étape E0.

### SLEEP = mise en veille d'un équipement (TA) du sous-réseau

Lors d'une étape E20, le disjoncteur intelligent (SM) reçoit le message de veille comportant en paramètre l'identification de l'équipement, par exemple son adresse MAC, permettant d'identifier le terminal sans ambiguïté. Ce message peut par exemple prendre la forme :
PLC_client_set_state(AA: BB:CC: DD: EE: FF,VEILLE)

Il effectue une étape de test, E21, visant à vérifier que l'équipement est bien enregistré dans la structure des données d'association (BC).

Si le résultat de ce test est positif, c'est-à-dire si l'identifiant (adresse MAC) est bien dans la structure de données BC, il est suivi d'une étape E22 de modification de l'état de l'équipement dans la table d'associations, comme représenté par exemple dans le tableau ci-dessous (l'équipement T1 est passé en veille).

**Table 2 : exemple de structure de donnée des équipements associés au sous-réseau du disjoncteur intelligent; mise en veille de T1**

| Equipement | état | adresse (MAC@) |
|---|---|---|
| T1 | **VEILLE** | *AA:BB:CC:DD:EE:FF* |
| T2 | OFF | *AA:BB:CC:DD:EE:GG* |
| T3 | VEILLE | *AA:BB:CCDD:EE:HH* |

Lors d'une étape E21, la structure de donnée BC des équipements étant à jour, la table est testée pour connaître l'état de l'ensemble des équipements raccordés au sous-réseau CPL.

Si tous les équipements connectés sont en veille, il est inutile de maintenir actif le réseau CPL. Lors d'une étape E24, un test est effectué pour savoir si le boîtier CPL est éteint, c'est-à-dire si le sous-réseau CPL est actif ou non. Si le CPL est allumé, comme tous les équipements sont enregistrés comme inactifs dans la table de la base BC, un ordre de désactivation du CPL est donné lors d'une étape E25.

Sinon aucune action n'est effectuée et on peut revenir à l'étape E0.

La figure 6 représente les étapes d'un procédé selon le second mode de réalisation de l'invention.

Selon ce mode de réalisation de l'invention, l'intelligence du système est centralisée dans la passerelle de service (4), qui traite l'ensemble des messages Wake, Call ou Sleep décrits précédemment pour l'ensemble des sous-réseaux/boîtiers CPL. Une telle passerelle est conçue de fait pour avoir une vision d'ensemble du réseau local auquel sont raccordés les équipements de la maison. Elle enregistre et maintient en mémoire des tables des équipements du réseau local, repérés généralement par leur adresse MAC. Elle peut par ailleurs recevoir simplement de tels messages en provenance du réseau local du site (par exemple, par une mise en œuvre de la norme UPnP) ou interroger cycliquement ses bases pour avoir connaissance de l'état d'un équipement (mise en veille, réveil, changement de sous-réseau électrique, etc.), et maintenir en mémoire une table de gestion globale des sous-réseaux. En fonction de l'état des sous-réseaux CPL et de l'activité des équipements, elle envoie vers les disjoncteurs intelligents des ordres d'activation ou désactivation des courants CPL. On notera qu'une telle solution permet donc de considérer les disjoncteurs intelligents comme de simples équipements connectés au réseau local de la passerelle de service, aussi appelés objets connectés.

Selon un exemple, au cours d'une étape E'0, une structure globale de données d'association est construite en mémoire, contenant l'ensemble des sous-réseaux et des équipements qui leur sont associés.
- la ligne 1 répertorie les sous-réseaux CPL, en l'occurrence les sous réseaux CP2, CP3 et CP4 associés respectivement aux disjoncteurs intelligents SM1, SM2 et SM3 (ligne 3) ;
- L'état de chaque disjoncteur intelligent est mémorisé en ligne 3 (ON/OFF) ;
- Puis chaque sous-tableau correspondant à un sous-réseau contient une liste d'équipements (Ti) connectés au sous-réseau, avec leur état, comme expliqué plus haut.

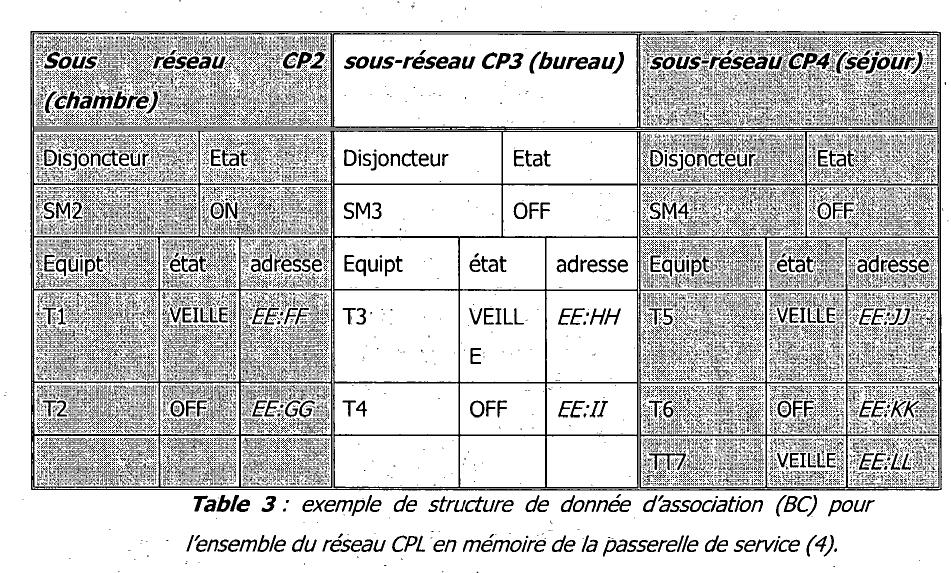

A l'issue de cette étape E'0, le déroulement du procédé est très similaire à ce qui a été présenté à l'appui de la figure 5 précédente. Notamment :
- À l'usage, les tables d'adresses des équipements se remplissent pour chaque sous-réseau au fur et à mesure que les équipements joignent, quittent un sous-réseau, se réveillent ou se mettent en veille ;
- Lorsqu'un équipement passe en veille, la passerelle le détecte et coupe automatiquement le routage CPL de ce sous-réseau si tous les équipements sont éteints ou en veille (étape E'25).
- Lorsqu'un équipement B veut joindre un équipement A, la passerelle scrute les différentes sous-tables associées aux différents sous-réseaux et envoie un ordre d'activation du disjoncteur correspondant (étape E'6) si la table contient l'adresse MAC de l'équipement cible.
- Lorsqu'un équipement veut faire du broadcast ou du multicast (message diffusé sur l'ensemble du réseau local), la passerelle scrute les différentes sous-tables associées aux différents sous-réseaux et active un ou disjoncteur (étape E'6) si la sous-table associée contient une adresse MAC quelconque d'un équipement en veille.
- etc.

Il va de soi que le mode de réalisation qui a été décrit ci-dessus a été donné à titre purement indicatif et nullement limitatif, et que de nombreuses modifications peuvent être facilement apportées par l'homme de l'art sans pour autant sortir du cadre de l'invention, tel que défini par les revendications jointes.

## Revendications

1. Procédé de routage (6) de courants porteurs en ligne (CPL) dans un site résidentiel (1) équipé d'une pluralité d'équipements électriques (T2-T4, Ti) aptes à communiquer sur une pluralité de sous-réseaux (CP2-CP4) électriques par courants porteurs en ligne, chaque sous-réseau correspondant à une partie du réseau électrique du site résidentiel isolé électriquement des autres sous-réseaux, ledit procédé comportant les étapes suivantes pour au moins un sous-réseau :
- initialisation (E0, E'0) d'une structure de données d'association (BC) associant ledit sous-réseau (CP2-CP4) avec un identifiant (MAC) d'au moins un premier équipement électrique (T1) ;
- obtention (E1, E10) d'une requête de communication comportant un identifiant d'un second équipement électrique (T2) ;
- obtention de la structure de données d'association (BC) du sous-réseau ;
- comparaison de l'identifiant obtenu du second équipement électrique avec l'identifiant dudit au moins un premier équipement électrique associé au sous-réseau ;
- en fonction des résultats de la comparaison, commande d'activation (E6) du sous-réseau.

2. Procédé de routage selon la revendication 1, **caractérisée en ce qu'**il comporte en outre les étapes de :
- obtention (E23, E'23) de l'état desdits premiers équipements électriques associés au sous-réseau ;
- en fonction de l'état desdits premiers équipements électriques, commande de désactivation (E25, E'25) du sous-réseau.

3. Procédé de routage selon la revendication 1, **caractérisée en ce que** la requête de communication est un message de réveil (WAKE) en provenance d'un premier équipement associé au sous-réseau.

4. Procédé de routage selon la revendication 1, **caractérisée en ce que** la requête de communication comporte un message (CALL) à destination d'un premier équipement associé au sous-réseau.

5. Procédé de routage selon la revendication 2, **caractérisé en ce que** la requête d'obtention de la structure de données d'association du sous-réseau est précédée d'une étape d'obtention d'un message (SLEEP) de mise en veille d'un premier équipement associé au sous-réseau.

6. Dispositif de routage de courants porteurs en ligne (CPL) dans un site résidentiel (1) équipé d'une pluralité d'équipements électriques aptes à communiquer sur une pluralité de sous-réseaux (CP2-CP4) par courants porteurs en ligne, chaque sous-réseau correspondant à une partie du réseau électrique du site résidentiel isolé électriquement des autres sous-réseaux, ledit dispositif de routage (SM1-SM3, 4) comportant pour au moins un sous-réseau :
- un module d'activation (DEL) ;
- un module d'initialisation (GES) d'une structure de données d'association associant ledit sous-réseau (CP2-CP4) avec un identifiant (@MAC) d'au moins un premier équipement électrique (T1) ;
- un module d'obtention (COM) d'une requête de communication comportant un identifiant d'un second équipement électrique (T2) ;
- un module d'obtention (GES) de la structure de données d'association du sous-réseau ;
- un module de comparaison (GES) de l'identifiant obtenu du second équipement électrique avec l'identifiant dudit au moins un premier équipement électrique associé au sous-réseau ;
- un module de commande (GES) d'activation (E6) du sous-réseau en fonction des résultats de la comparaison.

7. Disjoncteur intelligent comportant un dispositif de routage selon la revendication 6.

8. Passerelle de service comportant un dispositif de routage selon la revendication 6.

9. Programme d'ordinateur comportant des instructions de code pour la mise en œuvre du procédé de routage conforme à la revendication 1, lorsque celle-ci est exécutée par un processeur.

## Patentansprüche

1. Verfahren zum Routen (6) von Powerline-Kommunikation (PLC) in einer Wohnstätte (1), die mit mehreren elektrischen Einrichtungen (T2-T4, Ti) ausgestattet ist, die geeignet sind, durch Powerline-Kommunikation über mehrere Teilstromnetze (CP2-CP4) zu kommunizieren, wobei jedes Teilnetz einem Teil des Stromnetzes der Wohnstätte entspricht, der von den anderen Teilnetzen elektrisch isoliert ist, wobei das Verfahren für mindestens ein Teilnetz die folgenden Schritte umfasst:
- Initialisieren (E0, E'0) einer Zuordnungsdatenstruktur (BC), die dem Teilnetz (CP2-CP4) einen Identifikator (MAC) mindestens einer ersten elektrischen Einrichtung (T1) zuordnet;
- Erhalten (E1, E10) einer Kommunikationsanforderung, die einen Identifikator einer zweiten elektrischen Einrichtung (T2) umfasst;
- Erhalten der Zuordnungsdatenstruktur (BC) des Teilnetzes;
- Vergleichen des erhaltenen Identifikators der zweiten elektrischen Einrichtung mit dem Identifikator der mindestens einen ersten elektrischen Einrichtung, die dem Teilnetz zugeordnet ist;
- Befehlen einer Aktivierung (E6) des Teilnetzes in Abhängigkeit von den Ergebnissen des Vergleichs.

2. Verfahren zum Routen nach Anspruch 1, **dadurch gekennzeichnet, dass** es ferner die folgenden Schritte umfasst:
- Erhalten (E23, E'23) des Zustands der ersten elektrischen Einrichtungen, die dem Teilnetz zugeordnet sind;
- Befehlen einer Deaktivierung (E25, E'25) des Teilnetzes in Abhängigkeit von dem Zustand der ersten elektrischen Einrichtungen.

3. Verfahren zum Routen nach Anspruch 1, **dadurch gekennzeichnet, dass** die Kommunikationsanforderung eine Wecknachricht (WAKE) von einer ersten Einrichtung ist, die dem Teilnetz zugeordnet ist.

4. Verfahren zum Routen nach Anspruch 1, **dadurch gekennzeichnet, dass** die Kommunikationsanforderung eine Nachricht (CALL) an eine erste Einrichtung umfasst, die dem Teilnetz zugeordnet ist.

5. Verfahren zum Routen nach Anspruch 2, **dadurch gekennzeichnet, dass** vor der Anforderung zum Erhalten der Zuordnungsdatenstruktur des Teilnetzes ein Schritt des Erhaltens einer Nachricht (SLEEP) zum Versetzen einer ersten Einrichtung, die dem Teilnetz zugeordnet ist, in den Ruhezustand erfolgt.

6. Vorrichtung zum Routen von Powerline-Kommunikation (PLC) in einer Wohnstätte (1), die mit mehreren elektrischen Einrichtungen ausgestattet ist, die geeignet sind, durch Powerline-Kommunikation über mehrere Teilnetze (CP2-CP4) zu kommunizieren, wobei jedes Teilnetz einem Teil des Stromnetzes der Wohnstätte entspricht, der von den anderen Teilnetzen elektrisch isoliert ist, wobei die Vorrichtung zum Routen (SM1-SM3, 4) für mindestens ein Teilnetz Folgendes umfasst:
- ein Aktivierungsmodul (DEL);
- ein Modul zur Initialisierung (GES) einer Zuordnungsdatenstruktur, die dem Teilnetz (CP2-CP4) einen Identifikator (@MAC) mindestens einer ersten elektrischen Einrichtung (T1) zuordnet;
- ein Modul zum Erhalten (COM) einer Kommunikationsanforderung, die einen Identifikator einer zweiten elektrischen Einrichtung (T2) umfasst;
- ein Modul zum Erhalten (GES) der Zuordnungsdatenstruktur des Teilnetzes;
- ein Modul zum Vergleichen (GES) des erhaltenen Identifikators der zweiten elektrischen Einrichtung mit dem Identifikator der mindestens einen ersten elektrischen Einrichtung, die dem Teilnetz zugeordnet ist;
- ein Steuermodul (GES) zur Aktivierung (E6) des Teilnetzes in Abhängigkeit von den Ergebnissen des Vergleichs.

7. Intelligenter Leistungsschalter, umfassend eine Vorrichtung zum Routen nach Anspruch 6.

8. Service-Gateway, umfassend eine Vorrichtung zum Routen nach Anspruch 6.

9. Computerprogramm, umfassend Codeanweisungen zur Ausführung des Verfahrens zum Routen nach Anspruch 1, wenn diese von einem Prozessor ausgeführt werden.

## Claims

1. Routing method (6) for routing power line communication (PLC) in a residential site (1) equipped with a plurality of electrical equipments (T2-T4, Ti) able to communicate over a plurality of electrical subnetworks (CP2-CP4) through power line communication, each subnetwork corresponding to a part of the electrical network of the residential site that is electrically isolated from the other subnetworks, said method comprising the following steps for at least one subnetwork:
- initializing (E0, E'0) an association data structure (BC) associating said subnetwork (CP2-CP4) with an identifier (MAC) of at least one first electrical equipment (Tl);
- obtaining (E1, E10) a communication request containing an identifier of a second electrical equipment (T2);
- obtaining the association data structure (BC) from the subnetwork;
- comparing the obtained identifier of the second electrical equipment with the identifier of said at least one first electrical equipment associated with the subnetwork;
- on the basis of the results of the comparison, commanding activation (E6) of the subnetwork.

2. Routing method according to Claim 1, **characterized in that** it furthermore comprises the steps of:
- obtaining (E23, E'23) the state of said first electrical equipments associated with the subnetwork;
- on the basis of the state of said first electrical equipments, commanding deactivation (E25, E'25) of the subnetwork.

3. Routing method according to Claim 1, **characterized in that** the communication request is a wake message (WAKE) from a first equipment associated with the subnetwork.

4. Routing method according to Claim 1, **characterized in that** the communication request contains a message (CALL) destined for a first equipment associated with the subnetwork.

5. Routing method according to Claim 2, **characterized in that** the request to obtain the association data structure from the subnetwork is preceded by a step of obtaining a message (SLEEP) for putting a first equipment associated with the subnetwork into standby.

6. Routing device for routing power line communication (PLC) in a residential site (1) equipped with a plurality of electrical equipments able to communicate over a plurality of subnetworks (CP2-CP4) through power line communication, each subnetwork corresponding to a part of the electrical network of the residential site that is electrically isolated from the other subnetworks, said routing device (SM1-SM3, 4) comprising, for at least one subnetwork:
- an activation module (DEL);
- an initialization module (GES) for initializing an association data structure associating said subnetwork (CP2-CP4) with an identifier (@MAC) of at least one first electrical equipment (Tl);
- an obtainment module (COM) for obtaining a communication request containing an identifier of a second electrical equipment (T2);
- an obtainment module (GES) for obtaining the association data structure from the subnetwork;
- a comparison module (GES) for comparing the obtained identifier of the second electrical equipment with the identifier of said at least one first electrical equipment associated with the subnetwork;
- a command module (GES) for commanding activation (E6) of the subnetwork on the basis of the results of the comparison.

7. Intelligent circuit breaker comprising a routing device according to Claim 6.

8. Service gateway comprising a routing device according to Claim 6.

9. Computer program comprising code instructions for implementing the routing method according to Claim 1 when it is executed by a processor.
